**Europäisches Patentamt**

**European Patent Office**

**Office européen des brevets**

(11) Veröffentlichungsnummer: **0 424 627 A2**

## EUROPÄISCHE PATENTANMELDUNG

(21) Anmeldenummer: 90115947.5

(51) Int. Cl.5: **H01M 2/16**

(22) Anmeldetag: 21.08.90

(30) Priorität: 25.10.89 DE 3935462

(43) Veröffentlichungstag der Anmeldung:
02.05.91 Patentblatt 91/18

(84) Benannte Vertragsstaaten:
**DE FR GB**

(71) Anmelder: **Accumulatorenwerke Hoppecke Carl Zoellner & Sohn GmbH & Co. KG Bontkirchener Strasse 1 Postfach 1140 W-5790 Brilon 2(DE)**

(72) Erfinder: **Becker-Kaiser, Rudolf, Dr.**
**Laurentiusstrasse 43**
**W-5790 Brilon 13(DE)**

(74) Vertreter: **Patentanwälte Dipl.-Ing. Alex Stenger Dipl.-Ing. Wolfram Watzke Dipl.-Ing. Heinz J. Ring Kaiser-Friedrich-Ring 70 W-4000 Düsseldorf 11(DE)**

(54) **Elektrochemische Wickelzelle.**

(57) Eine elektrochemische Wickelzelle (1), insbesondere $Li-MnO_2$-Wickelzelle, besitzt einen zwischen der Anode (8) und der Kathode (9) angeordneten Separator (10). Dieser ist durch einen einlagigen Vliesstoff aus miteinander verschweißten Polypropylenfasern gebildet, wobei der Durchmesser der Fasern 5 bis 10 $\mu$m, vorzugsweise ca. 8 $\mu$m beträgt. Die Flächenmasse des Vliesstoffes beträgt 20 bis 60 $g \cdot m^{-2}$, vorzugsweise ca. 40 $g \cdot m^{-2}$. Die Dicke des Vliesstoffes beträgt 0,1 bis 0,4 mm, vorzugsweise ca. 0,26 mm. Schließlich beträgt die Luftdurchlässigkeit des Vliesstoffes 400 bis 600 $dm^3 \cdot s^{-1} \cdot m^2$, vorzugsweise 500 $dm^3 \cdot s^{-1} \cdot m^2$ (bei 1 mbar Druckdifferenz).

EP 0 424 627 A2

## ELEKTROCHEMISCHE WICKELZELLE

Die Erfindung betrifft eine elektrochemische Wickelzelle, insbesondere Lithium-Wickelzelle und dabei insbesondere $Li-MnO_2$-Wickelzelle, mit einem zwischen den Elektroden (Anode, Kathode) angeordneten Separator aus einem Vliesstoff.

Ein Problem bei derartigen Hochleistungszellen in Wickelbauweise stellt der Separator dar, welcher üblicherweise aus einem Vliesstoff und/oder einer mikroporösen Folie besteht. So nimmt bei einer $Li-MnO_2$-Wickelzelle die Dicke der Kathode während der Entladung zu, wobei diese Volumenzunahme teilweise vom Separator aufgefangen werden muß, damit die Zelle sicher entladen werden kann und keine Kurzschlüsse entstehen. Aus diesem Grunde kann in $Li-MnO_2$-Wickelzellen der Separator nicht beliebig dünn sein.

Zur Herstellung derartiger Separatoren mit ausreichender Dicke für $Li-MnO_2$-Wickelzellen ist es bisher üblich, eine Vliesstofflage und eine mikroröse Folie übereinander zu legen, was jedoch Probleme beim Wickelvorgang mit sich bringt. Auch die Verwendung von Bindemitteln zur Verfestigung der Vliesstoffasern ist nachteilig.

Ein wesentlicher Nachteil bei relativ dicken Vliesstoffen aus Fasern mit üblichen Durchmessern von größer 20 $\mu$m ist jedoch, daß der Innenwiderstand der Wickelzelle derart heraufgesetzt wird, daß hohe Entladeströme nicht mehr möglich sind. Darüber hinaus geht durch einen dicken Vliesstoff Volumen für die aktive Elektrodenmasse verloren, so daß ein Kapazitätsverlust der Wickelzelle die Folge ist.

Umgekehrt besteht bei relativ geringen Dicken die Gefahr, daß sich das weiche Lithium durch die relativ großen Poren hindurchdrückt, so daß bei derartigen Separatoren für Wickelzellen das Risiko eines inneren Kurzschlusses besteht. Darüber hinaus haben derartige Vliesstoffe den bereits eingangs erwähnten Nachteil, daß nämlich die während der Entladung entstehende Zunahme des Kathodenvolumens nicht vom Separator aufgefangen werden kann.

Davon ausgehend liegt der Erfindung die **Aufgabe** zugrunde, einen verbesserten Separator aus einem Vliesstoff für eine elektrochemische Wickelzelle, insbesondere Lithium-Wickelzelle und dabei insbesondere $Li-MnO_2$-Wickelzelle zu schaffen.

Als technische Lösung wird mit der Erfindung vorgeschlagen, daß der Separator ein einlagiger Vliesstoff aus miteinander verschweißten Polypropylenfasern mit folgenden technischen Daten ist:
- der Durchmesser der Polypropylenfasern beträgt 5 bis 10 $\mu$m
- die Flächenmasse des Vliesstoffes beträgt 20 bis 60 $g \cdot m^{-2}$
- die Dicke des Vliesstoffes beträgt 0,1 bis 0,4 mm, vorzugsweise 0,2 bis 0,3 mm
- die Luftdurchlässigkeit des Vliesstoffes beträgt 400 bis 600 $dm^3 \cdot s^{-1} \cdot m^2$ (bei 1 mbar Druckdifferenz).

Vorzugsweise besitzt der Vliesstoff folgende technische Daten:
- der Faserdurchmesser beträgt ca. 8 $\mu$m
- die Flächenmasse des Vliesstoffes beträgt ca. 40 $g \cdot m^{-2}$
- die Dicke des Vliesstoffes beträgt ca. 0,26 mm
- die Luftdurchlässigkeit des Vliesstoffes beträgt ca. 500 $dm^3 \cdot s^{-1} \cdot m^2$ (bei 1 mbar Druckdifferenz).

Schließlich ist der Vliesstoff vorzugsweise kalandriert.

Bei der Bestimmung der technischen Daten erfolgt die Bestimmung der Flächenmasse nach DIN 53854-75, die Bestimmung der Dicke nach DIN 53855-T01-82 sowie die Bestimmung der Luftdurchlässigkeit nach DIN 53887-77.

Ein nach dieser technischen Lehre ausgebildeter Separator für eine elektrochemische Wickelzelle, insbesondere $Li-MnO_2$-Wickelzelle hat den wesentlichen Vorteil, daß durch die Verwendung von dünnen Fasern (Mikrofasern) ein dichter Separator ausreichender Dicke entsteht, der auf optimale Weise die an ihn gerichteten Anforderungen zur Trennung der Elektroden erfüllt. Zunächst kann durch die Verschweißung der Polypropylenfasern miteinander auf die Verwendung eines zusätzlichen Binders verzichtet werden. Die Verfestigung der Fasern kann dabei durch Punktschweißung auf thermische Weise oder mit Ultraschall erfolgen. Die einlagige Ausbildung des Vliesstoffes bringt eine Vereinfachung des Wickelvorganges mit sich. Vor allem ist der Vliesstoff derart mechanisch fest, daß er maschinenverarbeitbar ist. Er ist darüber hinaus auch ausreichend dick für $Li-MnO_2$-Wickelzellen, so daß das Kathodenwachstum ohne weiteres durch den Separator kompensiert werden kann. Der Separator ist darüber hinaus derart porös, daß der Innenwiderstand der Wickelzelle gering ist, so daß ohne weiteres hohe Entladeströme möglich sind. Schließlich ist der erfindungsgemäße Separator chemisch, thermisch sowie mechanisch derart stabil, daß eine ausreichende Sicherheit gewährleistet ist. Die Gefahr, daß sich das weiche sowie leicht verformbare Lithium durchdrückt und dabei ein Kurzschluß entsteht, existiert bei dem erfindungsgemäßen Separator nicht.

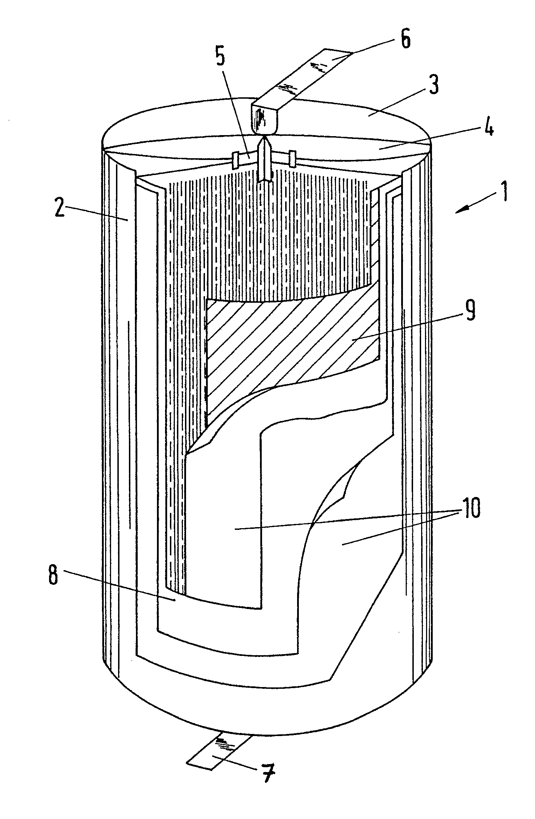

Ein Ausführungsbeispiel einer erfindungsgemäßen elektrochemischen Wickelzelle wird nachfolgend anhand der Zeichnung beschrieben. Diese zeigt eine perspektivische Ansicht der elektrochemischen Wickelzelle, die zur Sichtbarmachung des Innern sektorartig aufgeschnitten ist, wobei insbesondere die äußeren Lagen erkennbar sind.

Die elektrochemische Wickelzelle 1 besteht aus einem zylindrischen Gehäuse 2 insbesondere aus Edelstahl. Die beiden Stirnseiten dieses zylindrischen Gehäuses 2 sind jeweils mit einem Deckel 3 verschweißt, der mit einer Vergußmasse 4 jeweils gefüllt ist. Im oberen Deckel 3 ist eine Glas/Metall-Poldurchführung 5 angeordnet. Durch diese ist eine Anschlußfahne 6 für den einen Pol der Wickelzelle 1 hindurchgeführt. Im unteren Bereich der Wickelzelle 1 weist das Gehäuse 2 eine entsprechende Anschlußfahne 7 für den anderen Pol der Wickelzelle 1 auf.

Im Innern des Gehäuses 2 ist ein spiralförmig aufgewickeltes Elektrodenpaket angeordnet. Dieses besteht aus einer Lithium-Anode 8 sowie aus einer Kathode 9, insbesondere eine Feststoffkathode beispielsweise aus $MnO_2$. Zwischen Anode 8 und Kathode 9 ist jeweils ein Separator 10 angeordnet.

Dieser Separator 10 ist durch einen einlagigen Vliesstoff aus miteinander verschweißten Polypropylenfasern gebildet. Der Faserdurchmesser beträgt dabei ca. 8 $\mu$m. Der Vliesstoff hat eine Flächenmasse von ca. 40 $g \cdot m^{-2}$, seine Dicke beträgt ca. 0,26 mm und die Luftdurchlässigkeit beträgt ca. 500 $dm^3 \cdot s^{-1} \cdot m^2$ (bei 1 mbar Druckdifferenz).

Schließlich weist die elektrochemische Wickelzelle 1 einen Elektrolyten auf.

Bezugszeichenliste :

   1 elektrochemische Wickelzelle
   2 Gehäuse
   3 Deckel
   4 Vergußmasse
   5 Poldurchführung
   6 Anschlußfahne
   7 Anschlußfahne
   8 Anode
   9 Kathode
   10 Separator

**Ansprüche**

1. Elektrochemische Wickelzelle (1), insbesondere Lithium-Wickelzelle und dabei insbesondere Li-$MnO_2$-Wickelzelle, mit einem zwischen den Elektroden (Anode 8, Kathode 9) angeordneten Separator (10) aus einem Vliesstoff,
**dadurch gekennzeichnet,**
daß der Separator (10) ein einlagiger Vliesstoff aus miteinander verschweißten Polypropylenfasern mit folgenden technischen Daten ist:
- der Durchmesser der Polypropylenfasern beträgt 5 bis 10 $\mu$m

- die Flächenmasse des Vliesstoffes beträgt 20 bis 60 $g \cdot m^{-2}$
- die Dicke des Vliesstoffes beträgt 0,1 bis 0,4 mm, vorzugsweise 0,2 bis 0,3 mm
- die Luftdurchlässigkeit des Vliesstoffes beträgt 400 bis 600 $dm^3 \cdot s^{-1} \cdot m^2$ (bei 1 mbar Druckdifferenz).

2. Elektrochemische Wickelzelle nach Anspruch 1, dadurch gekennzeichnet, daß der Vliesstoff folgende technische Daten aufweist:
- der Faserdurchmesser beträgt ca. 8 $\mu$m
- die Flächenmasse des Vliesstoffes beträgt ca. 40 $g \cdot m^{-2}$
- die Dichte des Vliesstoffes beträgt ca. 0,26 mm
- die Luftdurchlässigkeit des Vliesstoffes beträgt ca. 500 $dm^3 \cdot s^{-1} \cdot m^2$ ( bei 1 mbar Druckdifferenz).

3. Elektrochemische Zelle nach Anspruch 1 oder 2, dadurch gekennzeichnet, daß der Vliesstoff kalandriert ist.